# EUROPEAN PATENT SPECIFICATION

(11) **EP 1 692 901 B1**
(45) Date of publication and mention of the grant of the patent: **05.12.2007**
(21) Application number: 03785816.4
(22) Date of filing: 13.12.2003
(51) Int. Cl.: H04Q 7/38

(54) **A SYSTEM, ARRANGEMENT AND A METHOD FOR HANDLING CONNECTION OF A MOBILE STATION MOVING IN COMMUNICATIONS SYSTEMS SUPPORTING COMMUNICATION OF DATA**
EIN SYSTEM, EINE ANORDNUNG UND EINE METHODE FÜR DIE BEHANDLUNG DES ANSCHLUSSES EINER BEWEGLISHEN STATION BEIM BEWEGEN IN DIE KOMMUNIKATIONSSYSTEME, DIE KOMMUNIKATION VON DATEN VERLAGERN
SYSTEME, AGENCEMENT ET PROCEDE DE GESTION D'UNE CONNEXION D'UNE STATION MOBILE SE DEPLA ANT DANS DES SYSTEMES DE COMMUNICATIONS ASSURANT LA COMMUNICATION DE DONNEES

(43) Date of publication of application: 23.08.2006
(73) Proprietor: TELEFONAKTIEBOLAGET LM ERICSSON (publ), 164 83 Stockholm (SE)
(72) Inventor: LUNDIN, Niklas, S-423 34 Torslanda (SE)
(74) Representative: Mohsler, Gabriele
(86) International application number: PCT/EP2003/014209
(87) International publication number: WO 2005/060297

(56) References cited:
- WO-A-02/35879
- WO-A-03/103325
- US-A1- 2002 123 365

## Description

### FIELD OF THE INVENTION

The present invention relates to a communications system supporting communication of data, which comprises a number of core networks with a plurality of core network functional server nodes, also called core nodes, and a number of radio access networks, each with a number of radio access network control nodes, also called control nodes, wherein at least some of the core nodes are arranged in a pool to, in common, control at least a number of control nodes supporting pooling of core nodes. The invention also relates to a core network functional server node, or a core node, used in a communication system supporting communication of data, for mobility (and session) management, and which forms part of a pool of core network functional server nodes which, in common, are able to serve at least one radio access network, or part of a radio access network, to which mobile stations can connect over radio access network control nodes. Still further the invention relates to a method for handling connection of a mobile station moving in a communication system supporting communication of data, and comprising a number of core networks with a plurality of core network functional server nodes, and a number of radio access networks, each with a number of radio access network control nodes, wherein at least some of the core nodes are arranged in a pool to, in common, control at least a number of radio access network control nodes supporting pooling of core nodes.

### STATE OF THE ART

Communication systems, particularly wireless communication systems, supporting communication of data or packet data, provide access over a number of radio networks and comprise one or more core networks. Each radio network generally comprises radio network control means comprising a number of radio network control nodes controlling base stations to which user stations or mobile stations can be connected or attached. Generally a radio network control node is controlled by a core network functional server node, in the case of packet data a packet data support node, of a core network. For GPRS GSM/UMTS such a packet data support node is denoted an SGSN (Serving GPRS Support Node). Generally each core node, particularly SGSN, controls one or more radio network control nodes, i.e. it is responsible for such radio network control means, for example RNCs (Radio Network Controller) or BSCs (Base Station Controller). Generally it is fixed which SGSN controls which RNCs. This is often disadvantageous among others since an SGSN has to be dimensioned for the worst case, i.e. a number of subscribers may be roaming within the network in a similar manner at the same time, meaning that an SGSN has to be configured to have a lot of spare capacity, which only is used in such cases. During other circumstances it is a waste of resources. When a subscriber or a mobile station is roaming within the network such that the closest base station will be controlled by another radio network control node than the one he attached to, and the SGSN which is responsible for a particular radio network control node is statically configured, the responsibility for the connection will have to be taken over by another SGSN. This involves a lot of signalling, for example with the home location node of the subscriber or for updating purposes, which means a substantial load on the home location nodes. Furthermore it has been realized that it is very expensive and requires a lot of complicated configurational work to make reconfigurations and/or to add equipment in such systems. High costs are also involved when such a system needs to be built out or when servers are to be replaced by other servers or SGSNs e.g. in the case of malfunctioning. Moreover it is disadvantageous as far as load sharing and redundancy issues are concerned. For a subscriber who is roaming within the network or changes routing area, responsibility for such a subscriber by a core node will have to be transferred to other core nodes as the subscriber moves throughout the network. This leads to a lot of signalling between the core nodes and home location nodes of the subscriber in order to update involve nodes, for example HLR (Home Location Register) nodes, between concerned core nodes, e.g. SGSNs, and between concerned SGSN and GGSN (Gateway GPRS Support Node), which severely loads the nodes and requires a lot of signalling in general. Therefore the so called pooling concept has been introduced. The pooling concept relates to pooling of core network nodes. As referred to above, a subscriber or a mobile station moving from one routing area handled by for example one SGSN to another routing area handled by another SGSN, will trigger a so called Inter SGSN Routing Area Update (ISRAU). This is described in 3GPP TS 23.060, version 5.6.0, Release 5, section 6.9.1.2.2, Inter SGSN Routing Area Update, the content of which herewith is incorporated herein by reference.

In a pool an SGSN handles a much larger number of routing areas (shared by other SGSNs), and a mobile station or a roaming subscriber, can remain connected to one and the same SGSN as long as it is within the area covered by the pool. This means that a number of SGSNs are responsible for a number of routing areas, or a number of radio network control means, which they control in common and wherein particularly each SGSN is able to control any radio network control means within the pool. The pool concept for pooling of SGSNs and MSCs (Mobile Switching Centers) has been standardized in 3GPP TS 23.236, Release 5, which herewith also is incorporated herein by reference. Thus, when the pooling concept is implemented, a mobile station will remain connected or attached to one and the same SGSN as long as it is in the geographical area covered by the pool (unless the SGSN is to be taken down or malfunctioning or similar). The allocation of a mobile station to a particular SGSN in a pool can be done in different ways, it may for example be done arbitrarily or randomly, it may be done taking load sharing and/or redundancy into consideration, or consecutive attaching mobile stations may be allocated consecutive SGSNs etc. In principle any algorithm or method for allocating an SGSN (or an MSC) in a pool to a mobile station can be used.

However, not all radio access networks are, or will be, pool enabled, i.e. support pooling of core nodes, and the current development indicates that the GSM RANs will be pool enabled before the UMTS RANs. The situation may also occur that not all radio network control means, e.g. RNCs or BSCs, support the pooling concept even if belonging to one and the same radio access network, i.e. part(s) of a radio access network may support pooling, whereas other part(s) of the same radio access network do not.

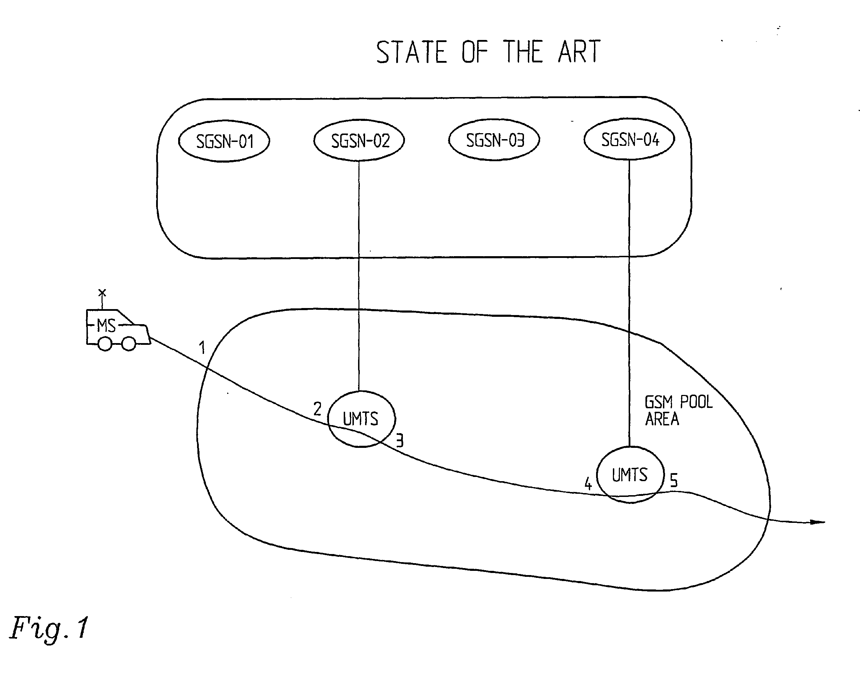

Dual mode core nodes, for example dual mode SGSNs, which support for example both GSM and UMTS, are known. This means for example that a dual mode SGSN supporting both GSM and UMTS potentially could be connected to a GSM RAN that supports pooling i.e. the control nodes of which are pool enabled and to an UMTS RAN that is not pool enabled. Similar situations might also occur in multi-vendor scenarios when for example radio network control means, e.g. RNCs or BSCs, of one vendor support pooling whereas those of another do not. Moreover, in most cases UMTS coverage will be introduced as so called "hot spots" on top of existing GSM coverage. This is illustrated in Fig. 1 in which a pool area of GSM coverage is shown. The area is handled by SGSNs 01-04. Within the pool there are (here) two so called UMTS hot spots. In this scenario every transition between GSM and UMTS (the transitions 2-5 in the figure), as the MS is roaming through the area covered by the pool, will then potentially trigger an ISRAU, since SGSNs 2 and 4 handle the UMTS areas. This means that the benefit of the pooling concept will be limited since the MS in the worst case will perform an ISRAU at each transition instead of staying on one and the same SGSN. Thus, such a situation is today handled by the standardized ISRAU procedure as referred to above and a backward compatability mechanism (GTP relay, 3GPP TS 23.236) which makes sure that a new SGSN is able to get hold of subscriber data etc. and which is built in into the pool solution. This requires a lot of signalling between SGSNs since there will be a lot of Inter SGSN Routing Area Updates and it is, to a large extent, not possible to take advantage of the pooling concept. A similar situation may also arise when only part of one and the same radio access network is pool enabled. Of course the situation will be the same if an UMTS RAN is pool-enabled whereas a GSM RAN is not etc. For circuit switched communication similar situation will be produced but in that case the core nodes comprise MSCs. Thus, it will under such circumstances not be possible to take advantage of the pooling concept, and a lot of signalling will be required between SGSNs within one and the same pool, a lot of signalling will also be required from SGSNs in a pool towards home location nodes and mobile switching centers, which is clearly disadvantageous.

### SUMMARY OF THE INVENTION

What is needed is therefore a system through which advantage can be taken under varying conditions of the pooling concept, i.e. the arrangement of a number of core nodes, such as SGSNs or MSCs, in a pool. Particularly a system is needed through which advantage of pooling can be taken when part of a radio access network, or radio network control nodes in a part of a radio access network is/are not pool enabled, i.e. do not support pooling of core nodes. A system is also needed through which advantage of pooling can be taken when different radio access networks are provided of which for example one does not support the pooling concept whereas another does. Particularly a system is needed through which the benefits of the pooling concept can be enjoyed in a mixed pool-enabled/non-pool-enabled radio access network environment. A system is also needed through which it gets possible to maintain a mobile station roaming in a network implementing the pooling concept connected to a core node at least under particular circumstances even if there are parts of the radio network or different radio access technologies which do not support pooling. Still further a system is needed through which signalling can be reduced in a network supporting or implementing the pooling concept. Particularly a system is needed through which signalling between core nodes and signalling between core nodes and home location nodes etc. can be reduced as compared to through known solutions. A system is also needed through which the costs can be lowered and bandwidth can be saved for example on links between a pool and home location nodes. Particularly a system is needed through which the benefits of the pooling concept can be increased and more flexibly be taken advantage of under different circumstances.

A core network functional server node (core node), e.g. in this case SGSN and MSC etc. or a packet data support node, is needed through which one or more of the above mentioned objects can be achieved. Still further a method as initially referred to is needed through which one or more of the above mentioned objects can be fulfilled.

Therefore a communication system as initially referred to is provided wherein, for a transition of a connection of a mobile station from a first core network functional server node, in the following denoted first control node not supporting pooling of core nodes, but served by a first core node belonging to a pool, to a second control node supporting pooling of core nodes, the mobile station is able to remain connected to said first core node forming part of the pool.

Particularly the core node comprises means for generating and allocating, to a mobile station connecting/attaching to a first core node, a temporary mobile station identity (temporary MS id) ((P)-TMSI), which temporary mobile station identity further is provided with a pool identification for identifying the core node in the pool to which the core node belongs, and said pool identification is included in a modified mobile station routing/location area update message. The temporary mobile station identity and pool identity is allocated to the mobile station irrespectively of whether the mobile station connects to a (radio network) control node which is pool enabled or not (as long as the core node controlling the control node forms part of the pool). When the mobile station moves from the coverage of the first control node controlled by a first core node to that of the second control node, said modified routing/location area update message including the pool identification is relayed to said first core node. Particularly said transition comprises an intra core node intersystem change. In a particular implementation at least one of the core nodes of the pool comprises a dual-/multimode core node supporting access over more than one radio access network implementing different radio access technologies.

According to one aspect of the present invention said first and second control nodes belong to the same radio access network, wherein a first part of said network does not support pooling and contains said first control node, whereas a second part of said radio access network supports pooling and contains said second control node. In particular implementations said core nodes comprise Serving GPRS Support Nodes (SGSNs) and the control nodes comprise Base Station Controllers (BSCs) for GSM communication and/or Radio Network Controllers (RNCs) for UMTS communication using WCDMA radio access technology.

In other implementations at least some of the core nodes comprise Mobile Switching Centers (MSC) for circuit switched communication, at least some of the control nodes comprising Base Station Controllers (BSCs).

In one implementation said first and second control nodes belong to the same radio access network comprising an UMTS access network or a GSM access network, and part of said UMTS or GSM radio access network does not support pooling of core nodes. In another implementation the first and second control nodes support different radio access technologies and belong to different radio access networks, the first core node comprising a dual access node. In one implementation the first control node is an UMTS RNC not supporting pooling and the second control node is a GSM BSC supporting pooling. In another implementation the first control node is a GSM BSC not supporting pooling whereas the second control node is a UMTS RNC supporting pooling. Advantageously the first core node of a pool allocates a temporary mobile station identity to a connecting/attaching mobile station irrespectively of whether the mobile station connects over a control node supporting pooling of core nodes or to a control node not supporting pooling of core nodes. Particularly the temporary mobile station identity comprises a ((P)-TMSI) modified in that a pool identification e.g. comprising a Network Resource Identification (NRI, Network Resource Identifier) is included. Particularly said pool identification, e.g. NRI, is included in a mobile station routing/location area update message provided to the second control node as the mobile station moves from the area covered by the first control node to that covered by the second control node. Particularly the first core node uses the Gb-flex/Iu-flex mechanism (cf. 3GPP TS 23.228, v.5.2.0., Release 5) for allocating a temporary mobile station identity comprising pool unique identity irrespectively of whether the radio access networks or part of networks are not Iu-flex/Gb-flex enabled.

Therefore the invention also provides a core network functional server node (core node) as initially referred to, which comprises means for, at the transition of a connection/attachment of a mobile station from a first control node not supporting pooling of core nodes to another, second, control node supporting pooling of core nodes, keeping the mobile station connected/attached to said first core node. Particularly said means comprises means for generating and allocating and using a received temporary mobile station identity further comprising a pool identification for identifying the core node in the pool to which a core node belongs. Particularly the temporary mobile station identity is generated and allocated irrespectively of whether the mobile station is connected/attached to a control node supporting pooling of core nodes or not. Particularly said temporary mobile station identity is contained in a routing/location area update message received/relayed from a second control node enabling keeping the mobile station connected to the (first) core node. Particularly a mobile station transition from a first to a second control node comprises an intra core-intersystem change. Particularly the first core node comprises a dual/multi- mode core node supporting access over more than one radio access network, wherein the at least two radio access networks implement different radio access technologies. Particularly the node comprises a Service GPRS Support Node (SGSN). Alternatively it comprises a Mobile Switching Center (MSC). Particularly the node uses the Gb-flex mechanism or the Iu-flex mechanism for allocating a modified temporary mobile identity (with pool identity) to a mobile station and the transition comprises an intra SGSN intersystem change.

The invention therefore also suggests a method as initially referred to, which comprises the step of; for a mobile station moving from a first routing/location area in which it is connected to a radio access network control node not supporting pooling of core nodes but served by a first core node forming part of the pool, to a second routing/location area controlled by a radio access network control node supporting pooling of core nodes, keeping the mobile station connected to said first core node at least until the mobile station enters a routing/location area controlled by a radio network control node not supporting pooling of core nodes. Particularly the method comprises the steps of; allocating a temporary mobile station identity provided with a pool identification to a mobile station connecting to a first radio network access control node served by a core node of the pool, irrespectively of whether the first radio access network control node supports pooling of server nodes or not; including the pool identification in the message relating to change/updating of routing/location area when the mobile station moves to a routing/location area covered by a second radio access network control node supporting pooling of core nodes; relaying the routing/location area change/updating message to the first core node.

Particularly the first and second radio access network control nodes belong to the same radio access network and implement the same radio access technology. Particularly the first core node comprises a dual/multimode access node supporting at least two radio access technologies. In one implementation the first control node is an UMTS RNC and the second control node is a GSM BSC. In an alternative implementation the first control node is a GSM BSC whereas the second control node is an UMTS RNC. Particularly the first and second core nodes are SGSNs. In an alternative implementation said first and second core nodes comprise mobile switching centers (MSC).

### BRIEF DESCRIPTION OF THE DRAWINGS

The invention will in the following be more thoroughly described, in a non-limiting manner, and with reference to the accompanying drawings, in which:
- Fig. 2: shows an embodiment with a first radio access network supporting pooling of core nodes and a second radio access network not supporting pooling of core nodes,
- Fig. 3: shows an embodiment of the invention in which a part of a radio access network is not pool enabled even if core nodes controlling it are arranged in a pool,
- Fig. 4: shows an embodiment in which a GSM radio access network is pool enabled whereas a UMTS radio access network is not pool enabled, the pool comprising a dual access SGSN,
- Fig. 5: is a figure similar to Fig. 4 but for circuit switched communication and wherein the core nodes arranged in a pool comprise MSCs,
- Fig. 6: is a figure illustrating a UMTS pool with two dual access mode SGSNs wherein a GSM radio access network is not pool enabled,
- Fig. 7: is a sequence diagram illustrating, in a simplified manner, the sequence when a mobile station moves into a hotspot (UMTS) not supporting pooling of SGSNs, and the sequence when the mobile station leaves a hot spot not supporting pooling, entering a GSM pool,
- Fig. 8: is a flow diagram describing an exemplary scenario when a mobile station changes routing area in a network with pooled core nodes but wherein part of the radio access network control nodes are not pool enabled, and
- Fig. 9: is a flow diagram describing an example of a scenario when a mobile station moves in a network with pooled core nodes and in which there is one radio access network with pool enabled control nodes and one radio access network with non-pool enabled control nodes.

### DETAILED DESCRIPTION OF THE INVENTION

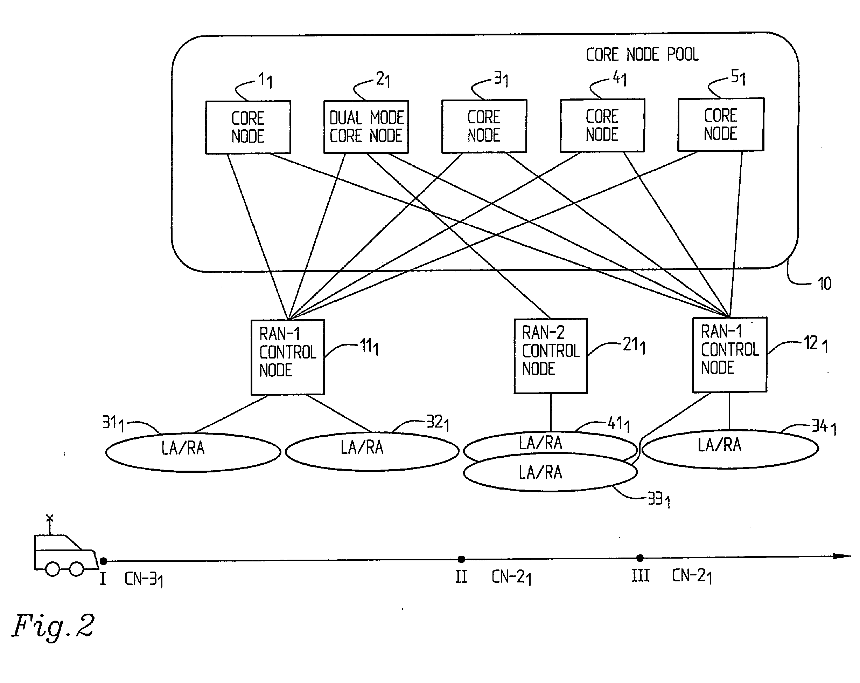

Fig. 2 shows a pool of core nodes 1₁, 2₁, 3₁, 4₁, 5₁. Core node 2₁ is a dual access mode core node supporting access by two different radio access networks using different radio access technologies, here RAN-1 and RAN-2. Each radio access network, here RAN-1 and RAN-2, comprises a number of base stations (not shown) controlled by radio network control means, here RAN-1 control node 11₁, RAN-1 control node 12₁ and RAN-2 control node 21₁. The core nodes in the pool share the responsibility for the control of radio access network RAN-1, which here means that any core node of the pool is able to control any one of the radio network control nodes 11₁, 12₁ of RAN-1. In this embodiment all core nodes are provided in a common pool. However, a pool may comprise more than two sites, there may also be more than one pool etc. It is in this context referred to the Swedish Patent Application with the application number 0003719-2 filed on October 13, 2000 by the same applicant. This document is herewith incorporated herein by reference.

However, in this particular embodiment RAN-2, or the control node 21₁, does not support pooling of core nodes, i.e. it is not pool enabled. RAN-2 control node 21₁ can in this embodiment only be controlled by dual mode core node 2₁. RAN-1 control node 11₁ here controls location/routing (LA/RA) areas 31₁, LA/RA 32₁, whereas RAN-1 control node 12₁ controls routing area LA/RA 34₁ and LA/RA 33. RAN-2 control node 21₁ controls LA/RA 41₁. It is here supposed that a mobile station MS is moving through the network. Upon entering the common pool area served by core nodes included in the core node pool 10, it is here supposed that it enters LA/RA 31₁ handled by RAN-1 11₁. Since RAN-1 control node 11₁ is a pool enabled control node, any one of core nodes 1₁-5₁ is able to control RAN-1 control node 11₁, or the mobile station MS. Which core node that is selected depends on the used algorithm, e.g. taking load sharing into consideration or an arbitrary core node can be selected. Here it is supposed that core node 3₁ has been selected. MS then remains connected to CN 3₁ when it moves through LA/RA 31₁ and LA/RA 32₁. However the mobile station leaves LA/RA 32₁, and at II it enters routing area LA/RA 41₁ controlled by RAN-2 control node 21₁, which is not pool enabled. This transition will trigger an ISRAU as standardized in 3GPP TS 23.060, Section 6.9.1.2.2 describing the ISRAU procedure and the MS will be transferred to dual mode core node CN 2₁ instead, which always handles RAN-2 control node 21₁. This is here the only node that can control RAN-2 control node. However, the MS proceeds through the network and at III leaves LA/RA 41₁ to enter LA/RA 34₁ handled by RAN-1 control node 12₁. RAN-1 control node 12₁ however is pool enabled. This means that the MS can stay connected to the preceding core node which was dual mode core node 2₁ and instead of an ISRAU the transition III comprises an intra core node intersystem change. This is possible since, when the mobile station connects/attaches at I, wherein a connect/attach request is received from MS in RAN-1 control node 11₁, and when core node 3₁ has been selected, core node 3₁ allocates a temporary mobile station identity, e.g. ((P)-TMSI) to the mobile station which includes a unique identity of the core node within the core node pool 10 which is unique for that pool. This identity may for example comprise a network resource identity, NRI, which is included as a part of the, here by core node 3₁, generated and allocated mobile station temporary identity. This makes it possible when the MS moves from the coverage of RAN-1 to the coverage of RAN-2, and from the coverage of RAN-2 to the coverage of RAN-1, for RAN-1 control node 12₁ to find the unique pool core node identity, e.g. NRI, in the MS routing area update message, and to relay this message to the core node to which the mobile station previously was connected, in this case the dual mode core node 2₁. Thus, when the mobile station returns to a control node that is pool enabled, the MS can remain connected to the same core node as it was connected to when it was under control of a non-pool enabled control node. Although, in this particular embodiment the MS first attached/connected to a control node (11₁) that was pool enabled, in which case it always would be allocated a temporary MS identity with information about the pool identity, also in case a mobile station first connected/attached to a control node which was not pool enabled, also the unique core node identity within the pool would have been added, enabling the MS to remain with the preceding core node when moving from a control node which is not pool enabled, to a pool enabled control node, according to the inventive concept. This means that for a considerable number of the transitions between a non-core enabled radio access network and a core enabled radio access network, no ISRAUs will be due, which means that the signalling between the core nodes within the pool will be considerably reduced as well as the signalling between the pooled nodes and other network nodes such as switching nodes, gateway nodes and home location nodes will be considerably reduced.

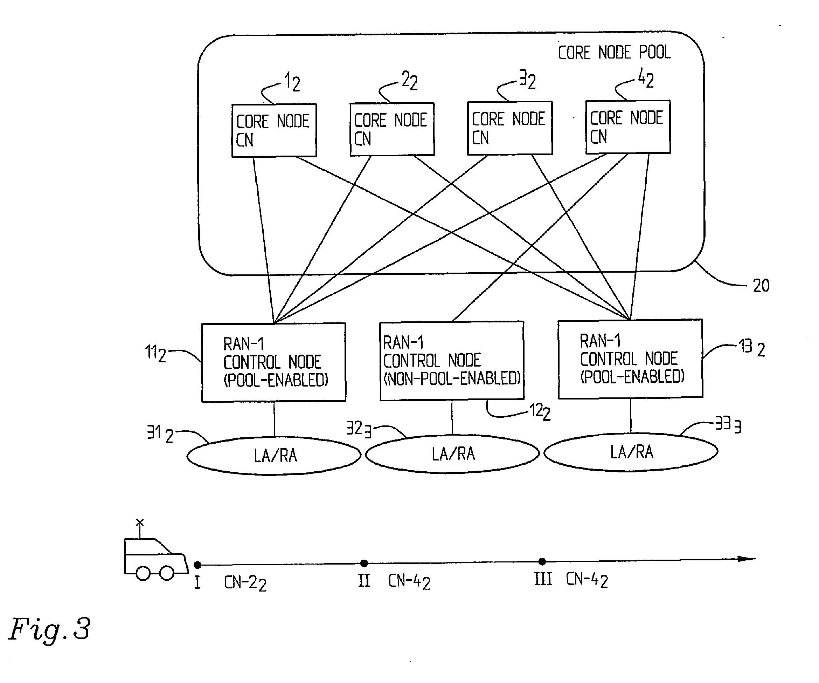

Fig. 3 shows an embodiment with a core node pool 20 comprising a number of core nodes CN 1₂, 2₂, 3₂, 4₂. The intention with this figure is to illustrate an embodiment in which part of a network does not support pooling, i.e. part of one and the same radio access network, here RAN-1 is pool enabled whereas another part of RAN-1 is not pool enabled. Here it is supposed that the part of RAN-1 that is not pool enabled, is controlled by control node 12₂ responsible for routing area 32₃, whereas control nodes 11₂, 13₂ are pool enabled and responsible for location/routing areas LA/RA 31₂ and 33₃ respectively. In this embodiment the core node pool does not comprise any dual mode access node. Of course, also in this case there might be a dual mode access node, but it is not necessary. Like in Fig. 2 it is here supposed that the mobile station MS moves through the network, from LA/RA 31₂, to LA/RA 32₃ and to LA/RA 33₃. When it attaches/connects over RAN-1 control node 11₂, it is here supposed that core node CN 2₂ is selected in agreement with the relevant criteria or the relevant algorithm as discussed above. At I MS enters LA/RA 31₂ and at II MS leaves LA/RA 31₂ and enters LA/RA 32₃ controlled by the control node 12₂ which is not pool enabled. Then, as in the preceding case, e.g. an ISRAU is due, and MS is connected to CN 4₂ instead of CN 2₂ which is the fixed core node controlling control node 12₂. However, for the mobile station the transition from LA/RA 32₃ to LA/RA 33₃, III, no ISRAU (for example) is needed, since already upon entry of the pool area the MS had been allocated a temporary mobile station identity, with pool identity (e.g. ((P)TMSI with NRI) and MS can remain connected to CN 4₂. It should be clear that, even if MS had entered the pool area at LA/RA 32₃, CN 4₂ would have generated and allocated a temporary mobile station identity and included the core node unique pool identity, even if control node 12₂ is not pool enabled, thus enabling that, when moving to LA/RA 33₃ or to LA/RA 31₂, MS could have remained with CN 4₂.

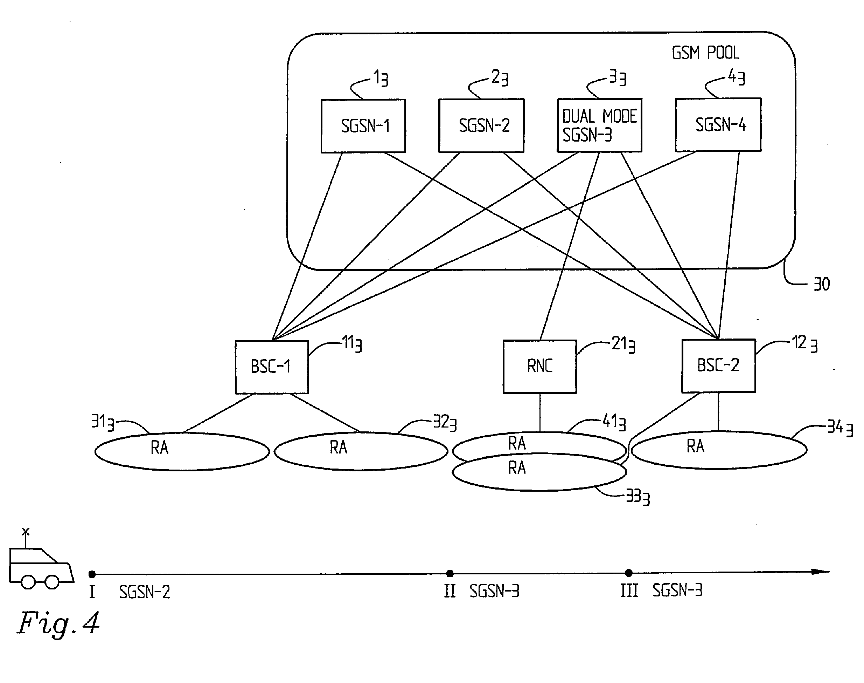

Fig. 4 shows an embodiment with a GSM pool 30 in which a number of SGSNs are provided, here SGSN-1 1₃, SGSN-2 2₃, dual mode SGSN-3 3₃ and SGSN-4 4₃. It is here supposed that the GSM radio access network is pool enabled whereas an UMTS radio access network is not. It is also supposed that UMTS coverage is introduced as "hot spot" on top of existing GSM coverage. Control nodes BSC-1 11₃, BSC-2 12₃ control GSM RAN routing areas RA 31₃, 32₃, 34₃ and 33₃ whereas UMTS RAN is controlled by control node RNC 21₃ responsible for RA 41₃. Since RNC 21₃ is not pool enabled, it can only be controlled by dual mode SGSN-3 3₃ whereas SGSNs 1₃, 2₃, 3₃, 4₃ in common control BSC-1 11₃ and BSC-2 12₃. It should of course be clear that in a real implementation there are far more control nodes, more routing areas and generally more core nodes, but for reasons of clarity such are not illustrated. It is here supposed that the dual mode SGSN-3 3₃ uses the Gb-flex mechanism relating to pooling for GSM between BSC/SGSN for allocating a P-TMSI (Temporary MS Id) to a mobile station even if the UMTS radio access network is not Iu-flex enabled. The unique identification of a core node in the SGSN pool 30 (particularly Network Resource Id, NRI) is, as referred to above, included as a part of the, by the SGSN generated, P-TMSI. In that manner, when the mobile station moves from UMTS to GSM coverage, i.e. from being controlled by RNC 21₃ to being controlled by BSC-2 12₃, BSC-2 12₃ will find the NRI in the MS routing area update message and relay the message to the preceding SGSN to which the MS was connected, i.e. to the same SGSN as the MS already is connected to (here SGSN-3). This means that the transition from UMTS to GSM coverage will result in an intra SGSN intersystem change instead of an ISRAU as discussed above. Of course, for the opposite situation, when UMTS radio access network is pool enabled and the GSM radio access network is not, the same principle is valid. As discussed above, the functioning will be the same also when part of for example a GSM (UMTS) radio access network is pool enabled, cf.
Fig. 3. When the mobile station moves to a non-pool enabled control node (BSC or RNC) if the same or different radio access systems are concerned, an ISRAU is likely when the SGSN changes, whereas when the MS returns to a pool enabled control node, e.g. BSC or RNC, the MS can remain connected to one and the same SGSN also after the transition.

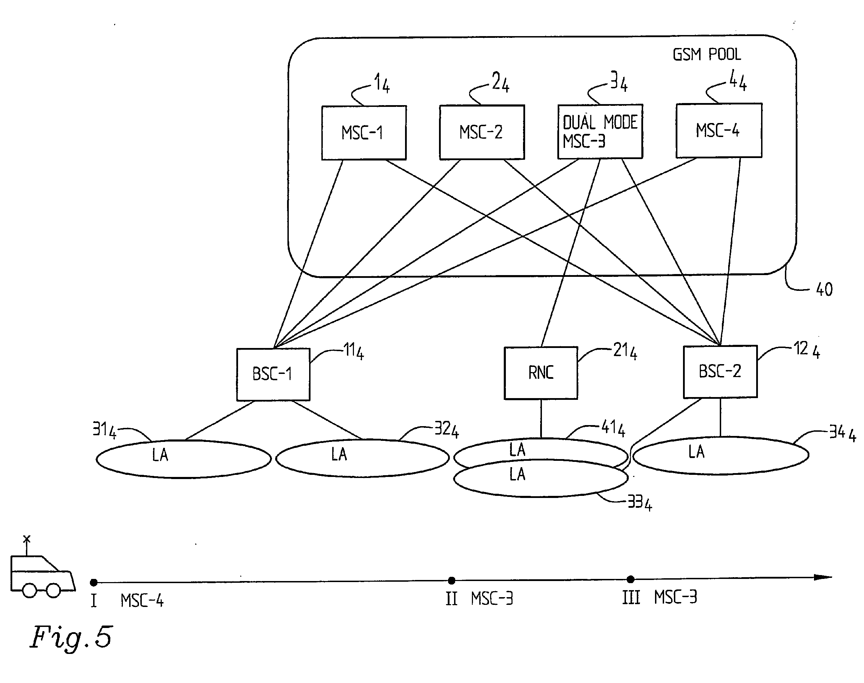

Fig. 5 shows an implementation of the inventive concept to circuit switched communication. It is here supposed that a number of core nodes, here comprising MSC-1 1₄, MSC-2 2₄, dual mode access node MSC-3 3₄ and MSC-4 4₄ are arranged in a GSM pool 40. MSCs 1₄, 2₄, 3₄, 4₄ in common control BSC-1 11₄ and BSC-2 12₄, whereas dual access MSC-3 3₄ is responsible for RNC 21₄. BSC-1 11₄ here controls LAs 31₄, 32₄ whereas BSC-2 12₄ controls LA 34₄, and LA 33₄, whereas RNC 21₄ controls LA 41₄. It is here supposed that MS upon entry of LA 31₄ via BSC-1 11₄ is connected to MSC-4 4₄ and that MSC-4 4₄ generates a TMSI with pool identity and allocates it to MS. At II a core node change to MSC-3 3₄ is required. When a MS moves from LA 41₄ where it is controlled by RNC 21₄ served by MSC-3 3₄, to LA 34₄, MS remains connected to dual access node MSC-3 3₄. In other aspects the functioning is similar to that described with reference to Figs. 2-4 and irrespectively of to which MSC an MS is connected upon connection/attach, i.e. irrespectively of whether the control node is pool enabled or not, i.e. here RNC 21₄ is not pool enabled, a temporary mobile station identity including unique pool identity, here unique MSC identity within the pool identity, is generated and allocated to the MS.

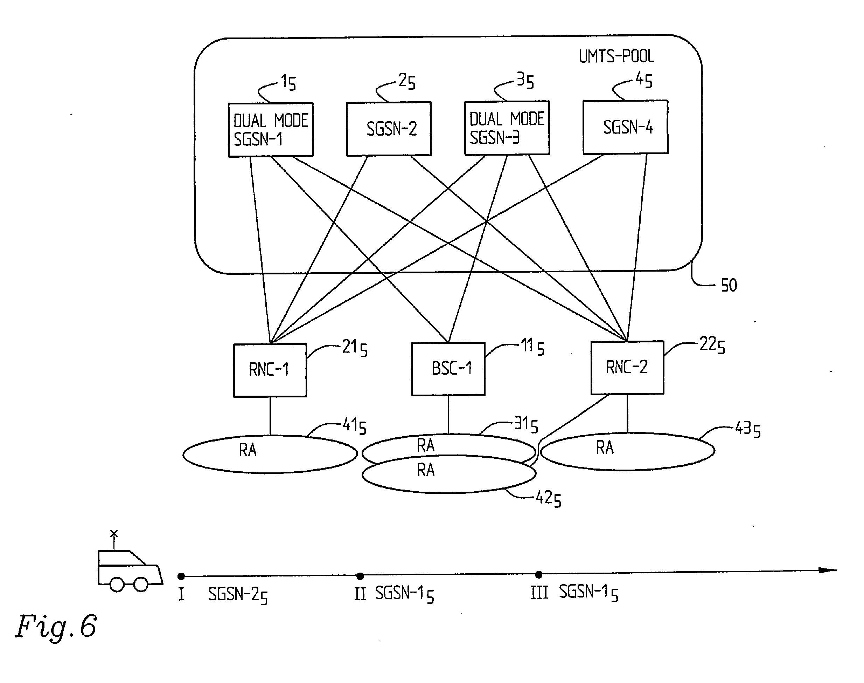

Fig. 6 shows still another embodiment wherein a number of core nodes are arranged in, here, an UMTS pool 50 which comprises dual mode SGSN-1 1₅, SGSN-2 2₅, dual mode SGSN-3 3₅ and SGSN-4 4₅. This embodiment differs from preceding illustrated embodiments in that the pool comprises two dual mode core nodes, with the intention to illustrate that a pool of course not is limited to but one dual mode core node; on the contrary there may be more than one dual mode core node, all core nodes may be dual mode core nodes etc. Any variation is possible within the scope of the appended claims. Here RNC-1 21₅ handles RA 41₅, RNC-2 22₅ handles RA 42₅ and 43₅ and BSC-1 11₅ handles RA 31₅. Core nodes 1₅-4₅ in common control RNCs 21₅ and 22₅ whereas BSC-1 11₅ can be controlled by dual mode SGSN-1 1₅ and dual mode SGSN-3 3₅. Thus, in this embodiment, BSC-1 is pool enabled in so far that it can be controlled by dual mode SGSN-1 1₅ and dual mode SGSN-3 3₅. One example is given for an MS moving from RA 41₅, where SGSN 2₅ has been selected according to the relevant criteria or the relevant algorithm. When MS enters routing area 31₅ controlled by BSC-1 11₅, is supposed that SGSN 1₅ is selected. However, when MS moves on into RA 43₅, it remains connected to SGSN 1₅ according to the principles described with reference to Figs. 2-5.

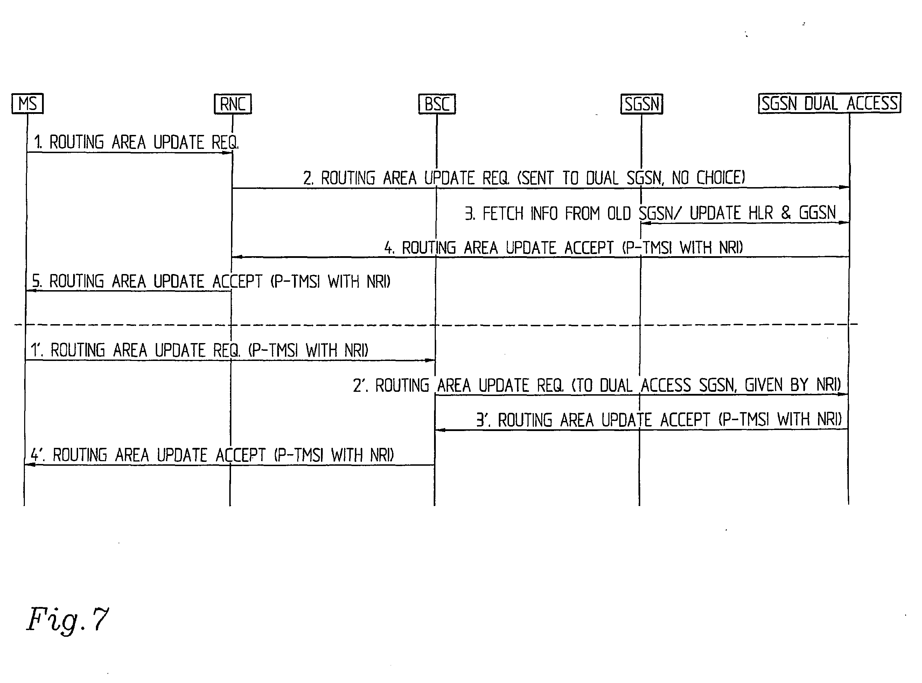

Fig. 7 is a simplified sequence diagram illustrating (above the dashed line) the sequence when a mobile station MS moves into e.g. an UMTS hot spot which is not pool enabled and, below the dashed line, the sequence when the MS leaves the UMTS hot spot and enters a GSM pool enabled radio access network. Thus, it is first supposed that mobile station MS sends a routing area update request, 1, to UMTS RNC. The RNC then sends a routing area update request to the dual access SGSN, it here has no other choice, 2.

The dual access SGSN fetches information from the old SGSN (to which the MS previously was connected) and updates the home location node, HLR (Home Location Register) and the relevant GGSN (Gateway GPRS Support Node), 3. The old SGSN thus provides information to dual access SGSN. Subsequently the dual access SGSN sends a routing area update accept with P-TMSI with NRI, according to the inventive concept, to the RNC, 4. RNC then sends a routing area update accept including P-TMSI with NRI, to the mobile station.

Subsequently, it is supposed that, in this case, an ISRAU was required and that there was a change of SGSNs from SGSN to the dual access SGSN. Below the dashed line, it is supposed that the mobile station leaves the hot spot. The MS sends a routing area update request (including the P-TMSI with NRI received from RNC) to the relevant BSC, 1'. The BSC then sends a routing area update request to the dual access SGSN, since information to that effect was given by NRI, 2'. The dual access SGSN then sends a routing area update accept (with P-TMSI with NRI) to the BSC, 3', which subsequently sends a routing area update accept with P-TMSI with NRI to the mobile station, 4'. Thus, when leaving the hot spot, no SGSN change is required.

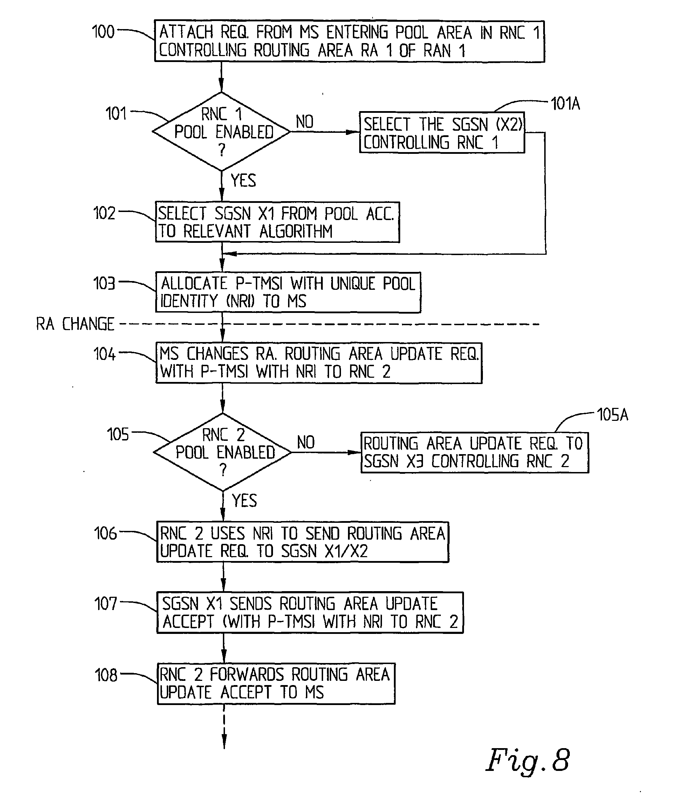

Fig. 8 is a flow diagram describing one example on a possible scenario (here for packet switched (PS) communication) when a mobile station enters a pool area and subsequently performs a routing area change indicated through the dashed line. Thus, it is here supposed that an attach request from an MS entering a pool area is received in RNC 1 controlling routing area RA 1 of a radio access network denoted RAN 1, 100. It is then examined whether RNC 1 is pool enabled, 101. If not, the SGSN responsible for controlling RNC 1 is selected, by necessity e.g. SGSN X2, 101A. If however RNC 1 is pool enabled, an SGSN, e.g. SGSN X1, is selected from the pool according to the relevant algorithm, 102. Of course any algorithm can be used for the selection of the appropriate SGSN. Subsequently, irrespectively of whether RNC 1 was pool enabled or not, a mobile station identity, e.g. P-TMSI with unique pool identity e.g. NRI, is generated and allocated to the MS, 103. It should be clear that the procedure when an attach request or connection request has been sent to the selected SGSN server includes more steps among others including that the SGSN has to accept etc. However, such steps do not have any influence on the inventive concept and are therefore not included in this flow.

At a later stage it is supposed that the MS changes routing area RA, as indicated through the dashed line in the Figure. Thus, the MS changes routing area and sends a routing area update request with P-TMSI with NRI to, here, RNC 2 belonging to the same radio access network RAN 1 as RNC 1. It is then examined if RNC 2 is pool enabled, 105. If not, the routing area update request is sent to the SGSN controlling RNC 2, e.g. SGSN X3, 105A. If, however, RNC 2 is pool enabled, RNC 2 uses NRI to send the routing area update request to SGSN X1 (or X2), 106. SGSN X1/X2 then sends a routing area update accept (on condition that it accepts), with P-TMSI with NRI to RNC 2, 107. RNC 2 forwards the routing area update accept to the MS, 108. It should be clear that this flow shows one particular plausible scenario, the important thing being that the unique pool identity is generated together with P-TMSI and provided irrespectively of whether an MS connects to, here, an RNC which is pool enabled or not, and that this information subsequently can be used when a mobile station leaves an, here, RNC which is not pool enabled. It thus relates to an implementation in which a part of one and the same radio access network does not support pooling of core nodes, here particularly SGSNs.

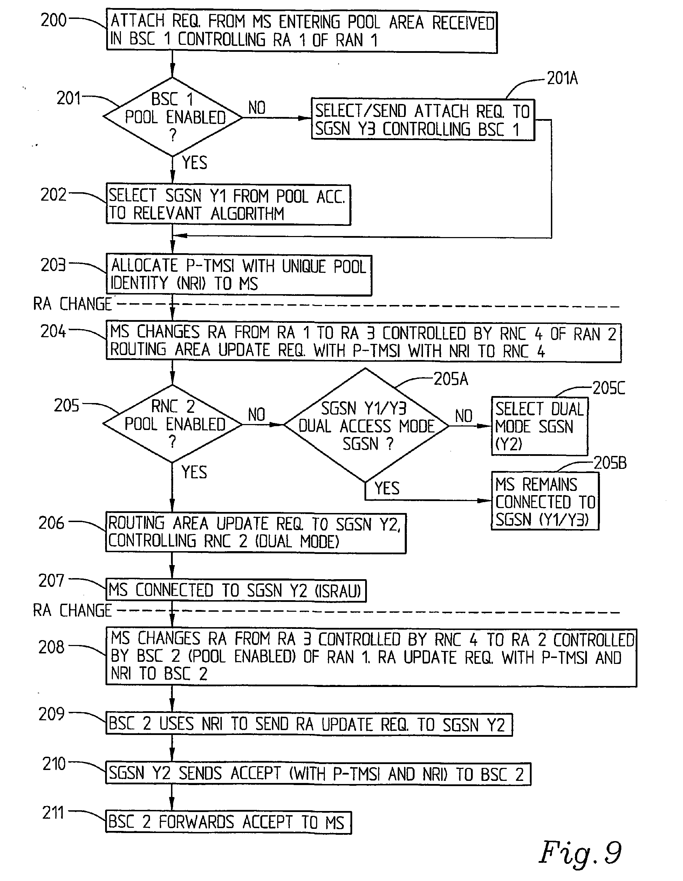

Fig. 9 is a further flow diagram illustrating a scenario (here for PS communication) in which there are two different radio access radio networks of which one, RAN 1, is pool enabled whereas the other, RAN 2, is not, and in which the mobile station changes routing area RA twice, indicated through the dashed lines in the flow. Thus, it is supposed that an attach request from a mobile station entering the pool area is received in BSC 1 controlling routing area RA 1 of RAN 1, 200. It is established whether BSC 1 is pool enabled, 201. If not, the SGSN controlling BSC 1 is selected, i.e. an attach request is sent here to SGSN Y3, 201A. If however BSC 1 is pool enabled, it is supposed that for example SGSN Y1 from the pool is selected according to the relevant algorithm, 202. In both cases, i.e. if BSC 1 was pool enabled or if BSC 1 was not, a P-TMSI with unique pool identity (NRI) is generated and allocated to the mobile station, 203.

Subsequently it is supposed that the mobile station changes routing areas from RA 1 to RA 3 controlled by RNC 4 of the other radio access network RAN 2. A routing area update request with P-TMSI with NRI is then sent to (here) RNC 4, 204. It is then established if RNC 4 is pool enabled, 205. If not, it is established if SGSN Y1/Y3 is a dual access mode SGSN, 205A. If not, a dual mode SGSN is selected, e.g. SGSN Y2, 205C. If yes, the MS remains connected to SGSN Y1. If however RNC 4 was pool enabled, a routing area update request is sent to SGSN Y2 controlling RNC 4, (here SGSN Y2 is supposed be a dual mode SGSN), 206. (If, in step 201A, another SGSN (Y3) had to be selected since BSC 1 was not pool enabled, the routing area update request was sent to SGSN Y3 instead.) The MS is then connected to SGSN Y2 (c.f. step 201A), 207 following the ISRAU procedure.

Subsequently it is supposed that the MS once more changes routing area from RA 3 controlled by RNC 4 to RA 2 controlled by BSC 2 (which is pool enabled), of RAN 1. Routing area update request with P-TMSI and NRI is then sent to BSC 2, 208. BSC 2 uses NRI to send a routing area update request to SGSN Y2 (dual mode SGSN), 209. SGSN Y2 sends an accept with P-TMSI and NRI, to BSC 2, 210, and BSC 2 forwards the accept to the MS, 211.

It should be clear that this merely is one particular scenario intended to illustrate the invention described in the claims 1 to 31.

When referring to routing areas in Figs. 7 and 9, it should be clear that for CS circuit switched communication, LAs would be indicated instead.

The invention is of course not limited to the particular illustrated embodiments and scenarios, but it can be varied in a number of ways, and it can be implemented in different systems etc. and further that the pools may be constituted in various different ways and that there may also be more than just two radio access networks involved, the inventive concept still is applicable.

## Claims

1. A communications system supporting communication of data and comprising a number of core networks with a plurality of core network functional server nodes (1₁, 2₁ ,... ) and a number of radio access networks (RAN-1, RAN-2,...) each with a number of radio access network control nodes (11₁, 21₁, 12₁,...) wherein at least some of the core nodes (1₁, 2₁...) are arranged in a pool to, in common, control at least a number of control nodes supporting pooling of core nodes,
**characterized in**
**that** for a transition of a connection of a mobile station (MS) from a first control node (21₁) not supporting pooling of core nodes but served by a first core node (2₁) belonging to a pool, to a second control node (12₁) supporting pooling of core nodes, means are provided for enabling the mobile station (MS) to remain connected to said first core node (2₁) forming part of the pool.

2. A communication system according to claim 1,
**characterized in**
said means generates/allocates for a mobile station connecting to a first core node (2₁), a temporary mobile station identity, said temporary mobile station identity including a pool identification for uniquely identifying the core node in the pool to which the core node belongs, that said pool identification is included in a modified mobile station routing/location area update message, and **in that** when the mobile station moves from the coverage of the first control node to the coverage of the second control node, said modified routing/ location area update message including the pool identification is relayed to said first core node (2₁) from said second control node (12₁).

3. A communication system according to claim 2,
**characterized in**
**that** said transition provides an intra core node intersystem change.

4. A communication system according to any one of claims 1-3,
**characterized in**
**that** at least one of the core nodes (1₁, 2₁,...) of the pool comprises a dual-/ multimode core node (2₁) supporting access over more than one radio access network (RAN-1, RAN2,...), said radio access networks implementing different radio access techniques.

5. A communication system according to any one of claims 1-4,
**characterized in**
**that** said first (21₁) and second (12₁) control nodes belong to the same radio access network, a first part of which not supporting pooling and containing said first control node and a second part of which supporting pooling and containing said second control node.

6. A communication system according to any one of the preceding claims,
**characterized in**
**that** the core nodes comprise Serving GPRS Support Nodes and in that the control nodes comprise Base Station Controllers for GSM communication and/or Radio Network Controllers for UMTS communication using WCDMA radio access technology.

7. A communication system according to any one of the preceding claims,
**characterized in**
**that** at least some core nodes comprise Mobile Switching Centers for circuit switched communication and in that at least some of the control nodes are Base Station Controllers.

8. A system according to any one of the preceding claims,
**characterized in**
**that** said first (21₁) and second (12₁) control nodes belong to the same radio access network comprising a radio access network for e.g. UMTS or GMS and in that a part of said UMTS RAN or GSM RAN does not support pooling of core nodes.

9. A system according to claim 4 and any one of claims 1-3,6,
**characterized in**
**that** the first (21₁) and second (12₁) control nodes support different radio access technologies, and in that the first (21₁) node comprises a dual mode access node.

10. A system according to claim 9,
**characterized in**
**that** the first (21₁) control node is an UMTS RNC not supporting pooling of core nodes, and in that the second (12₁) control node is a GSM BSC support pooling of core nodes.

11. A system according to claim 9,
**characterized in**
**that** the first (21₁) control node is a GSM BSC not supporting pooling of core nodes, and in that the second (12₁) control node is a UMTS RNC node supporting pooling of core nodes.

12. A system according to any one of claims 1-11,
**characterized in**
**that** the first (21₁) core node of a pool allocates a temporary mobile station identity with pool identification to a connecting/attaching mobile station irrespectively of whether the mobile station connects to a control node supporting pooling of core nodes or to a control node not supporting pooling of core nodes.

13. A system according to claim 12,
**characterized in**
**that** the temporary mobile station comprises a (P)-TMSI modified in that it is extended with a pool identification.

14. A system according to claim 13,
**characterized in**
**that** said pool identification is included in mobile station Routing/Location Area Update messages provided to the second control node.

15. A system according to claim 13 or 14,
**characterized in**
**that** the first core node uses the Gb-flex/Iu-flex mechanism for allocating a temporary mobile station identity comprising pool unique identity irrespectively of either of the radio access networks is not Iu-flex/Gb-flex enabled.

16. A core network functional server node used in (a) communication system(s) supporting communication of data for mobility and session management, and forming part of a pool of core network functional server nodes, in common able to serve at least one, or part of a, radio access network (RAN-1, RAN-2,...) to which a mobile station may connect over a radio access network control node,
**characterized in**
**that** the core node comprises means for, at a transition of a connection/attachment of a mobile station from a first control node (21₁) not supporting pooling of core nodes to another, second (12₁), control node supporting pooling of core nodes, keeping the mobile station connected to said first core node.

17. A core node according to claim 16,
**characterized in**
**that** said means comprises means for generating and allocating a temporary mobile station identity further comprising a pool identification for uniquely identifying the core node in the pool to which the said core node belongs.

18. A core node according to claim 17,
**characterized in**
**that** the temporary mobile station identity is generated and allocated upon entering the area served by any core node forming part of the pool irrespectively of whether the mobile station is connected to a control node (12₁, 21₁, _) supporting pooling of core nodes or not.

19. A core node according to claim 18,
**characterized in**
**that** said temporary mobile station identity is included in a routing/location area update message received/relayed from a second control node to the first core node enabling keeping the mobile station connected to the (21₁) core node.

20. A core node according to claim 19,
**characterized in**
**that** a mobile station transition from a first (21₁) to a second (12₁) control node comprises an intra core-intersystem change.

21. A core node according to any one of claims 16-20,
**characterized in**
**that** the (21₁) core node comprises a dual/multi mode core node supporting access over at least two radio access network (RAN-1, RAN-2, ...)implementing different radio access technologies.

22. A core node according to claim 21,
**characterized in**
**that** it uses the Gb-flex mechanism or the Iu-flex mechanism for allocating a modified temporary mobile identity including a pool identification to a mobile station and in that the transition comprises an intra SGSN intersystem change.

23. A core node according to any one of claims 16-21,
**characterized in**
**that** it comprises a Serving GPRS Support Node.

24. A core node according to any one of claims 16-21,
**characterized in**
**that** it comprises a Mobile Switching Center .

25. A method for handling connection of a mobile station moving in a communication system supporting communication of data, and comprising a number of core networks with a plurality of core network functional server nodes (1₁, 2₁,...) and a number of radio access networks (RAN-1, RAN-2, ...), each with a number of radio access network control nodes (11₁, 21₁, 12₁,...), at least some of the core nodes (1₁, 2₁) being arranged in a pool to, in common, control at least a number of radio access network control nodes supporting pooling of core nodes,
**characterized in**
**that** it comprises the step of: for a mobile station moving from a first routing area in which it is connected to a radio access network control node not supporting pooling of core nodes, but served by a first core node forming part of the pool, to a second routing/location area controlled by a radio access network control node supporting pooling of core nodes,
- keeping the mobile station connected to said first core node at least until the mobile station again enters a routing/location area controlled by a radio network control node not supporting pooling of core nodes.

26. A method according to claim 25,
**characterized in**
**that** it comprises the steps of:
- allocating a temporary mobile station identity provided with a pool identification, to a mobile station connecting to first a radio network access control node, served by a core node of the pool, irrespectively of whether the first radio access network control node supports pooling of core nodes or not;
- including the pool identification in the message relating to change/updating of routing/location area when the mobile station moves to a routing/location area covered by a second radio access network control node supporting pooling of core nodes;
- relaying the routing/location area change/updating message to the first core node from the second radio access network control node.

27. A method according to claim 26,
**characterized in**
**that** said first and second radio access network control nodes belong to the same radio access network and implement the same radio access technology.

28. A method according to claim 25 or 26,
**characterized in**
**that** the first core node comprises a dual/multimode access node supporting at least two radio access technologies.

29. A method according to claim 28,
**characterized in**
**that** the first control node is an UMTS RNC and that the second control node is a GSM BSC or vice versa.

30. A method according to any one of claims 25-29,
**characterized in**
**that** the first and second core nodes are SGSN:s.

31. A method according to any one of claims 25-28,
**characterized in**
**that** said first and second core node respectively comprises a mobile switching center.

## Patentansprüche

1. Kommunikationssystem, das die Übertragung von Daten unterstützt und eine Anzahl von Kernnetzen mit einer Mehrzahl von Kernnetz-Funktionsserverknoten (1₁, 2₁, ...) und eine Anzahl von Funkanschlussnetzen (RAN-1, RAN-2, ...) jeweils mit einer Anzahl von Funkanschlussnetz-Steuerknoten (11₁, 21₁, 12₁, ...) umfasst, wobei wenigstens einige der Kernknoten (1₁, 2₁, ...) in einem Pool angeordnet sind, um wenigstens eine Anzahl von Steuerknoten, die ein Pooling von Kernknoten unterstützen, gemeinsam zu steuern,
**dadurch gekennzeichnet, dass**
für einen Übergang einer Verbindung einer Mobilstation (MS) von einem ersten Steuerknoten (21₁), der ein Pooling von Kernknoten nicht unterstützt, aber durch einen ersten Kernknoten (2₁) gesteuert wird, der einem Pool angehört, zu einem zweiten Steuerknoten (12₁), der ein Pooling von Kernknoten unterstützt, Mittel zum Ermöglichen vorgesehen sind, dass die Mobilstation mit dem ersten Kernknoten (2₁) verbunden bleibt, der zum Pool gehört.

2. Kommunikationssystem nach Anspruch 1, **dadurch gekennzeichnet, dass**
das Mittel für eine Mobilstation, die sich an einen ersten Kernknoten (2₁) anschaltet, eine temporäre Mobilstationsidentität erzeugt/zuweist, wobei die temporäre Mobilstationsidentität eine Pool-Identifikation zum eindeutigen Identifizieren des Kernknotens im Pool, dem der Kernknoten angehört, enthält, dass die Pool-Identifikation in eine Nachricht über eine Aktualisierung eines modifizierten Routing-/Aufenthaltsgebiets der Mobilstation eingefügt ist, und dass, wenn sich die Mobilstation vom Versorgungsbereich des ersten Steuerknotens in den Versorgungsbereich des zweiten Steuerknotens bewegt, die Nachrichtung über die Aktualisierung des modifizierten Routing-/Aufenthaltsgebiets, welche die Pool-Identifikation enthält, vom zweiten Steuerknoten (12₁) an den ersten Kernknoten (2₁) weitervermittelt wird.

3. Kommunikationssystem nach Anspruch 2, **dadurch gekennzeichnet, dass**
der Übergang einen kernknoteninternen Intersystemwechsel vorsieht.

4. Kommunikationssystem nach einem der Ansprüche 1 bis 3,
**dadurch gekennzeichnet, dass**
wenigstens einer der Kernknoten (1₁, 2₁, ...) des Pools einen Dual-/Multimode-Kernknoten (2₁) umfasst, der einen Anschuss über mehr als ein Funkanschlussnetz (RAN-1, RAN-2, ...) unterstützt, wobei die Funkanschlussnetze unterschiedliche Funkanschlusstechniken implementieren.

5. Kommunikationssystem nach einem der Ansprüche 1 bis 4,
**dadurch gekennzeichnet, dass**
die ersten (21₁) und zweiten (12₁) Steuerknoten demselben Funkanschlussnetz angehören, von dem ein erster Teil ein Pooling nicht unterstützt und den ersten Steuerknoten enthält, und von dem ein zweiter Teil ein Pooling unterstützt und den zweiten Steuerknoten enthält.

6. Kommunikationssystem nach einem der vorhergehenden Ansprüche, **dadurch gekennzeichnet, dass**
die Kernknoten versorgende GPRS-Unterstützungsknoten umfassen, und dass die Steuerknoten Basisstationssteuerungen für die GSM-Kommunikation und/oder Funknetzsteuerungen für die UMTS-Kommunikation unter Verwendung der WCDMA-Funkanschlusstechnologie umfassen.

7. Kommunikationssystem nach einem der vorhergehenden Ansprüche, **dadurch gekennzeichnet, dass**
wenigstens einige Kernknoten Mobilvermittlungseinrichtungen zur leitungsvermittelten Kommunikation umfassen, und dass wenigstens einige der Steuerknoten Basisstationssteuerungen sind.

8. System nach einem der vorhergehenden Ansprüche, **dadurch gekennzeichnet, dass**
die ersten (21₁) und zweiten (12₁) Steuerknoten demselben Funkanschlussnetz angehören, dass ein Funkanschlussnetz z.B. für UMTS oder GMS umfasst, und dass ein Teil des UMTS-RANs oder des GSM-RANs ein Pooling von Kernknoten nicht unterstützt.

9. System nach Anspruch 4 und einem der Ansprüche 1 bis 3, 6, **dadurch gekennzeichnet, dass**
die ersten (21₁) und zweiten (12₁) Steuerknoten unterschiedliche Funkanschlusstechnologien unterstützen, und dass der erste (21₁) Knoten einen Dual-Mode-Anschlussknoten umfasst.

10. System nach Anspruch 9, **dadurch gekennzeichnet, dass**
der erste (21₁) Steuerknoten eine UMTS-RNC ist, die ein Pooling von Kernknoten nicht unterstützt, und dass der zweite (12₁) Steuerknoten eine GSM-BSC ist, die ein Pooling von Kernknoten unterstützt.

11. System nach Anspruch 9, **dadurch gekennzeichnet, dass**
der erste (21₁) Steuerknoten eine GMS-BSC ist, die ein Pooling von Kernknoten nicht unterstützt, und dass der zweite (12₁) Steuerknoten eine UMTS-RNC ist, die ein Pooling von Kernknoten unterstützt.

12. System nach einem der Ansprüche 1 bis 11, **dadurch gekennzeichnet, dass**
der erste (21₁) Kernknoten eines Pools einer sich anschaltenden/anschließenden Mobilstation eine temporäre Mobilstationsidentität mit einer Pool-Identifikation ungeachtet dessen zuweist, ob sich die Mobilstation an einen Steuerknoten, der ein Pooling von Kernknoten unterstützt, oder an einen Steuerknoten, der ein Pooling von Kernknoten nicht unterstützt, anschaltet.

13. System nach Anspruch 12, **dadurch gekennzeichnet, dass**
die temporäre Mobilstationsidentität eine (P)-TMSI umfasst, die insofern modifiziert ist, als sie mit einer Pool-Identifikation erweitert ist.

14. System nach Anspruch 13, **dadurch gekennzeichnet, dass**
die Pool-Identifikation in Nachrichten über eine Aktualisierung des Routing-/Aufenthaltsgebiets der Mobilstation eingefügt ist, die an den zweiten Steuerknoten geliefert werden.

15. System nach Anspruch 13 oder 14, **dadurch gekennzeichnet, dass**
der erste Kernknoten ungeachtet dessen, ob eines der Funkanschlussnetze nicht Iu-flex/Gb-flex-fähig ist, den Gb-flex/Iu-flex-Mechanismus zum Zuweisen einer temporären Mobilstationsidentität verwendet, die eine eindeutige Pool-Identität umfasst.

16. Kernnetz-Funktionsserverknoten, der in (einem) Kommunikationssystem(en), welche(s) die Übertragung von Daten unterstützt/unterstützen, zur Mobilitäts- und Sitzungsverwaltung verwendet wird und zu einem Pool von Kernnetz-Funktionsserverknoten gehört, die gemeinsam imstande sind, wenigstens ein Funkanschlussnetz (RAN-1, RAN-2, ...) oder einen Teil eines Funkanschlussnetzes (RAN-1, RAN-2, ...) zu versorgen, an welches sich eine Mobilstation über einen Funkanschlussnetz-Steuerknoten anschalten kann,
**dadurch gekennzeichnet, dass**
der Kernknoten Mittel umfasst, um bei einem Übergang einer Anschaltung/eines Anschlusses einer Mobilstation von einem ersten Steuerknoten (21₁), der ein Pooling von Kernknoten nicht unterstützt, zu einem anderen, zweiten (12₁) Steuerknoten, der ein Pooling von Kernknoten unterstützt, die Mobilstation mit dem ersten Kernknoten verbunden zu halten.

17. Kernknoten nach Anspruch 16, **dadurch gekennzeichnet, dass**
das Mittel Mittel zum Erzeugen und Zuweisen einer temporären Mobilstationsidentität umfasst, die ferner eine Pool-Identifikation zum eindeutigen Identifizieren des Kernknotens im Pool, dem der Kernknoten angehört, umfasst.

18. Kernknoten nach Anspruch 17, **dadurch gekennzeichnet, dass**
die temporäre Mobilstationsidentität beim Eintreten in das Gebiet, das durch irgendeinen Kernknoten versorgt wird, der zum Pool gehört, ungeachtet dessen erzeugt und zugewiesen wird, ob die Mobilstation mit einem Steuerknoten (12₁, 21₁, ...) verbunden ist, der ein Pooling von Kernknoten oder unterstützt oder nicht.

19. Kernknoten nach Anspruch 18, **dadurch gekennzeichnet, dass**
die temporäre Mobilstationsidentität in eine Routing/Aufenthaltsgebietsaktualisierungsnachricht eingefügt ist, die von einem zweiten Steuerknoten an den ersten Kernknoten empfangen/weitervermittelt wird und es ermöglicht, dass die Mobilstation mit dem (21₁) Kernknoten verbunden gehalten wird.

20. Kernknoten nach Anspruch 19, **dadurch gekennzeichnet, dass**
ein Mobilstationsübergang von einem ersten (21₁) zu einem zweiten (12₁) Steuerknoten einen kerninternen Intersystemwechsel umfasst.

21. Kernknoten nach einem der Ansprüche 16 bis 20, **dadurch gekennzeichnet, dass**
der (21₁) Kernknoten einen Dual-/Multimode-Kernknoten umfasst, der einen Anschluss über wenigstes zwei Funkanschlussnetze (RAN-1, RAN-2, ...) umfasst, die unterschiedliche Funkanschlusstechnologien implementieren.

22. Kernknoten nach Anspruch 21, **dadurch gekennzeichnet, dass**
er den Gb-flex-Mechanismus oder den Iu-flex-Mechanismus zum Zuweisen einer modifizierten Mobilstationsidentität, die eine Pool-Identifikation enthält, zu einer Mobilstation verwendet, und dass der Übergang einen SGSN-internen Intersystemwechsel umfasst.

23. Kernknoten nach einem der Ansprüche 16 bis 21, **dadurch gekennzeichnet, dass**
er einen versorgenden GPRS-Unterstützungsknoten umfasst.

24. Kernknoten nach einem der Ansprüche 16 bis 21, **dadurch gekennzeichnet, dass**
er eine Mobilvermittlungseinrichtung umfasst.

25. Verfahren zum Abwickeln einer Verbindung einer Mobilstation, die sich in einem Kommunikationsnetz bewegt, das die Übertragung von Daten unterstützt und eine Anzahl von Kernnetzen mit einer Mehrzahl von Kernnetz-Funktionsserverknoten (1₁, 2₁, ...) und eine Anzahl von Funkanschlussnetzen (RAN-1, RAN-2, ...) jeweils mit einer Anzahl von Funkanschlussnetz-Steuerknoten (11₁, 21₁, 12₁, ...) umfasst, wobei wenigstens einige Kernknoten (1₁, 2₁) in einem Pool angeordnet sind, um wenigstens eine Anzahl von Funkanschlussnetz-Steuerknoten, die ein Pooling von Kernknoten unterstützen, gemeinsam zu steuern,
**dadurch gekennzeichnet, dass** es den folgenden Schritt umfasst:
für eine Mobilstation, die sich von einem ersten Routing-Gebiet, in dem sie mit einem Funkanschlussnetz-Steuerknoten verbunden ist, der ein Pooling von Kernknoten nicht unterstützt, aber durch einen ersten Kernknoten versorgt wird, der zum Pool gehört, in ein zweites Routing-/Aufenthaltsgebiet bewegt, das durch einen Funkanschlussnetz-Steuerknoten gesteuert wird, der ein Pooling von Kernknoten unterstützt,
- Verbundenhalten der Mobilstation mit dem ersten Kernknoten, wenigstens bis die Mobilstation wieder in ein Routing-/Aufenthaltsgebiet eintritt, das durch einen Funkanschlussnetz-Steuerknoten gesteuert wird, der ein Pooling von Kernknoten nicht unterstützt.

26. Verfahren nach Anspruch 25, **dadurch gekennzeichnet, dass** es die folgenden Schritte umfasst:
- Zuweisen einer temporären Mobilstationsidentität, die mit einer Pool-Identifikation versehen ist, zu einer Mobilstation, die sich zuerst an einen Funknetzanschluss-Steuerknoten anschaltet, der durch einen Kernknoten des Pools versorgt wird, ungeachtet dessen, ob der erste Funkanschlussnetz-Steuerknoten ein Pooling von Kernknoten unterstützt oder nicht;
- Einfügen der Pool-Identifikation in die Nachricht bezüglich einer Änderung/Aktualisierung eines Routing-/Aufenthaltsgebiets, wenn sich die Mobilstation in ein Routing-/Aufenthaltsgebiet bewegt, das durch einen zweiten Funkanschluss-Steuerknoten versorgt wird, der ein Pooling von Kernknoten unterstützt;
- Weitervermitteln der Nachricht über die Änderung/Aktualisierung des Routing-/Aufenthaltsgebiets vom zweiten Funkanschluss-Steuerknoten an den ersten Kernknoten.

27. Verfahren nach Anspruch 26, **dadurch gekennzeichnet, dass**
die ersten und zweiten Funkanschlussnetz-Steuerknoten demselben Funkanschlussnetz angehören und dieselbe Funkanschlusstechnologie implementieren.

28. Verfahren nach Anspruch 25 oder 26, **dadurch gekennzeichnet, dass**
der erste Kernknoten einen Dual-/Multimode-Anschlussknoten umfasst, der wenigstens zwei Funkanschlusstechnologien unterstützt.

29. Verfahren nach Anspruch 28, **dadurch gekennzeichnet, dass**
der erste Steuerknoten eine UMTS-RNC ist, und dass der zweite Steuerknoten eine GSM-BSC ist, oder umgekehrt.

30. Verfahren nach einem der Ansprüche 25 bis 29, **dadurch gekennzeichnet, dass**
die ersten und zweiten Kernknoten SGSNs sind.

31. Verfahren nach einem der Ansprüche 25 bis 28, **dadurch gekennzeichnet, dass**
das der erste und der zweite Kernknoten jeweils eine Mobilvermittlungseinrichtung umfassen.

## Revendications

1. Système de communication supportant des communications de données et comprenant un certain nombre de réseaux centraux avec une pluralité de noeuds de serveurs fonctionnels de réseaux centraux (1₁, 2₁, ...) et un certain nombre de réseaux d'accès radio (RAN-1,RAN-2,...), chacun avec un certain nombre de noeuds de commande de réseau d'accès radio (11₁, 21₁, 12₁,...), dans lequel au moins certains des noeuds centraux (1₁, 2₁,...) sont agencés dans un groupe afin de commander, en commun, au moins un certain nombre de noeuds de commande supportant le groupement des noeuds centraux,
**caractérisé en ce que**
pour une transition d'une connexion d'une station mobile (MS) d'un premier noeud de commande (21₁) ne supportant pas le groupement des noeuds centraux mais desservi par un premier noeud central (2₁) appartenant à un groupe, à un second noeud de commande (12₁) supportant le groupement des noeuds centraux, des moyens sont prévus pour permettre à la station mobile (MS) de rester connectée audit premier noeud central (2₁) faisant partie du groupe.

2. Système de communication selon la revendication 1,
**caractérisé en ce que**
ledit moyen génère/alloue pour une station mobile se connectant à un premier noeud central (2₁), une identité de station mobile temporaire, ladite identité de station mobile temporaire incluant une identification de groupe pour identifier de manière unique le noeud central dans le groupe auquel le noeud central appartient, **en ce que** ladite identification de groupe est incluse dans un message de mise à jour de zone de localisation/routage de station mobile modifié, et **en ce que** lorsque la station mobile se déplace de la couverture du premier noeud de commande à la couverture du second noeud de commande, ledit message de mise à jour de zone de localisation/routage modifié incluant l'identification de groupe est relayé audit premier noeud central (2₁) à partir dudit second noeud de commande (12₁).

3. Système de communication selon la revendication 2,
**caractérisé en ce que**
ladite transition fournit un changement intersystème à l'intérieur du noeud central.

4. Système de communication selon une quelconque des revendications 1 à 3,
**caractérisé en ce que**
au moins un des noeuds centraux (1₁,2₁,...) du groupe comprend un noeud central bimodal/multimodal (2₁) supportant un accès via plus d'un réseau d'accès radio (RAN-1,RAN-2,...), lesdits réseaux d'accès radio implémentant des techniques d'accès radio différentes.

5. Système de communication selon une quelconque des revendications 1 à 4,
**caractérisé en ce que**
lesdits premier (21₁) et second (12₁) noeuds de commande appartiennent au même réseau d'accès radio, dont une première partie ne supporte pas le groupement et contient ledit premier noeud de commande et dont une seconde partie supporte le groupement et contient ledit second noeud de commande.

6. Système de communication selon une quelconque des revendications précédentes,
**caractérisé en ce que**
les noeuds centraux comprennent des noeuds de support GPRS de desserte et **en ce que** les noeuds de commande comprennent des contrôleurs de station de base pour une communication GSM et/ou des contrôleurs de radioréseau pour une communication UMTS utilisant une technologie d'accès radio WCDMA.

7. Système de communication selon une quelconque des revendications précédentes,
**caractérisé en ce que**
au moins certains noeuds centraux comprennent des centres de commutation pour les services mobiles pour des communications à commutation de circuits et **en ce que** au moins certains des noeuds de commande sont des contrôleurs de station de base.

8. Système selon une quelconque des revendications précédentes,
**caractérisé en ce que**
lesdits premier (21₁) et second (12₁) noeuds de commande appartiennent au même réseau d'accès radio comprenant un réseau d'accès radio pour, par exemple, UMTS ou GMS et **en ce que** une partie dudit RAN UMTS ou RAN GSM ne supporte pas le groupement des noeuds centraux.

9. Système selon la revendication 4 et une quelconque des revendications 1 à 3,6,
**caractérisé en ce que**
les premier (21₁) et second (12₁) noeuds de commande supportent différentes technologies d'accès radio, et **en ce que** le premier (21₁) noeud comprend un noeud d'accès bimodal.

10. Système selon la revendication 9,
**caractérisé en ce que**
le premier (21₁) noeud de commande est un RNC UMTS ne supportant pas le groupement des noeuds centraux, et **en ce que** le second (12₁) noeud de commande est un BSC GSM supportant le groupement des noeuds centraux.

11. Système selon la revendication 9,
**caractérisé en ce que**
le premier (21₁) noeud de commande est un MSC GSM ne supportant pas le groupement des noeuds centraux, et **en ce que** le second (12₁) noeud de commande est un noeud RNC UMTS supportant le groupement des noeuds centraux.

12. Système selon une quelconque des revendications 1 à 11,
**caractérisé en ce que**
le premier (21₁) noeud central d'un groupe alloue une identité de station mobile temporaire avec une identification de groupe à une station mobile de rattachant/se connectant sans tenir compte de ce que la station mobile se connecte à un noeud de commande supportant le groupement des noeuds centraux ou à un noeud de commande ne supportant pas le groupement des noeuds centraux.

13. Système selon la revendication 12,
**caractérisé en ce que**
la station mobile temporaire comprend un (P)-TMSI modifié **en ce qu'**il est étendu par une identification de groupe.

14. Système selon la revendication 13,
**caractérisé en ce que**
ladite identification de groupe est incluse dans les messages de mise à jour de zone de localisation/routage de station mobile fournis au second noeud de commande.

15. Système selon la revendication 13 ou 14,
**caractérisé en ce que**
le premier noeud central utilise le mécanisme Gb-flex/Iu-flex pour allouer une identité de station mobile temporaire comprenant une identité de groupe unique ne tenant pas compte de ce que l'un ou l'autre des réseaux d'accès radio n'est pas compatible avec Iu-flex/Gb-flex.

16. Noeud de serveur fonctionnel de réseau central utilisé dans un (des) système(s) de communication supportant une communication de données pour la gestion de session et de mobilité, et faisant partie d'un groupe de noeuds de serveurs fonctionnels de réseaux centraux, aptes en commun à desservir au moins un, ou une partie d'un réseau d'accès radio (RAN-1, RAN-2, ...) auquel une station mobile peut se connecter via un noeud de commande de réseau d'accès radio,
**caractérisé en ce que**
le noeud central comprend des moyens pour, à une transition d'un rattachement/connexion d'une station mobile depuis un premier noeud de commande (21₁) ne supportant pas le groupement des noeuds centraux à un autre, second noeud de commande (12₁) supportant le groupement des noeuds centraux, garder la station mobile connectée audit premier noeud central.

17. Noeud central selon la revendication 16,
**caractérisé en ce que**
ledit noeud comprend des moyens pour générer et allouer une identité de station mobile temporaire comprenant en outre une identification de groupe pour identifier de manière unique le noeud central dans le groupe auquel ledit noeud central appartient.

18. Noeud central selon la revendication 17,
**caractérisé en ce que**
l'identité de station mobile temporaire est générée et allouée lors de l'entrée dans la zone desservie par n'importe quel noeud central faisant partie du groupe sans tenir compte de ce que la station mobile est connectée à un noeud de commande (12₁, 21₁,...) supportant le groupement des noeuds centraux ou non.

19. Noeud central selon la revendication 18,
**caractérisé en ce que**
ladite identité de station mobile temporaire est incluse dans un message de mise à jour de zone de localisation/routage reçu/relayé depuis un second noeud de commande vers le premier noeud en permettant de garder la station mobile connectée au noeud central (21₁).

20. Noeud central selon la revendication 19,
**caractérisé en ce que**
une transition de station mobile d'un premier (21₁) à un second noeud de commande (12₁) comprend un changement intersystème à intérieur du noeud central.

21. Noeud central selon une quelconque des revendications 16 à 20,
**caractérisé en ce que**
le noeud central (21₁) comprend un noeud central bimodal/multimodal supportant un accès via au moins deux réseaux d'accès radio (RAN-1, RAN-2, ...) implémentant des technologies d'accès radio différentes.

22. Noeud central selon la revendication 21,
**caractérisé en ce que**
il utilise le mécanisme Gb-flex ou le mécanisme Iu-flex pour allouer une identité mobile temporaire modifiée incluant une identification de groupe à une station mobile et **en ce que** la transition comprend un changement intersystème à l'intérieur du SGSN.

23. Noeud central selon une quelconque des revendications 16 à 21,
**caractérisé en ce que**
il comprend un noeud de support GPRS de desserte.

24. Noeud central selon une quelconque des revendications 16 à 21,
**caractérisé en ce que**
il comprend un centre de commutation pour les services mobiles.

25. Procédé pour gérer une connexion d'une station mobile se déplaçant dans un système de communication supportant une communication de données, et comprenant un certain nombre de réseaux centraux avec une pluralité de noeuds de serveurs fonctionnels de réseaux centraux (1₁, 2₁, ...) et un certain nombre de réseaux d'accès radio (RAN-1,RAN-2,...), chacun avec un certain nombre de noeuds de commande de réseau d'accès radio (11₁, 21₁, 12₁,...), au moins certains des noeuds centraux (1₁, 2₁,...) étant agencés dans un groupe afin de commander, en commun, au moins un certain nombre de noeuds de commande de réseau d'accès radio supportant le groupement des noeuds centraux,
**caractérisé en ce que**
il comprend l'étape consistant à . pour une station mobile se déplaçant d'une première zone de routage dans laquelle elle est connectée à un noeud de commande de réseau d'accès radio ne supportant pas le groupement des noeuds centraux, mais desservie par un premier noeud central faisant partie du groupe, à une seconde zone de localisation/routage commandée par un noeud de commande de réseau d'accès radio supportant le groupement des noeuds centraux,
- garder la station mobile connectée audit premier noeud central au moins jusqu' à ce que la station mobile entre à nouveau dans une zone de localisation/routage commandée par un noeud de commande de radioréseau supportant le groupement des noeuds centraux.

26. Procédé selon la revendication 25,
**caractérisé en ce que**
il comprend les étapes consistant à:
- allouer une identité de station mobile temporaire pourvue d'une identification de groupe, à une station mobile se connectant à un premier noeud de commande de réseau d'accès radio, desservi par un noeud central du groupe, sans tenir compte de ce que le premier noeud de commande de réseau d'accès radio supporte le groupement des noeuds centraux ou non;
- inclure l'identification de groupe dans le message relatif au changement/ à la mise à jour de la zone de localisation/routage lorsque la station mobile se déplace vers une zone de localisation/routage desservie par un second noeud de commande de réseau d'accès radio supportant le groupement des noeuds centraux;
- relayer le message de mise à jour/changement de zone de localisation/routage au premier noeud central à partir du second noeud de commande de réseau d'accès radio.

27. Procédé selon la revendication 26,
**caractérisé en ce que**
lesdits premier et second noeud de commande de réseau d'accès radio appartiennent au même réseau d'accès radio et implémentent la même technologie d'accès radio.

28. Procédé selon la revendication 25 ou 26,
**caractérisé en ce que**
le premier noeud central comprend un noeud d'accès bimodal/multimodal supportant au moins deux technologies d'accès radio.

29. Procédé selon la revendication 28,
**caractérisé en ce que**
le premier noeud de commande est un RNC UMTS et le second noeud de commande est un BSC GSM ou vice versa.

30. Procédé selon une quelconque des revendications 25 à 29,
**caractérisé en ce que**
les premier et second noeuds centraux sont des SGSN:s.

31. Procédé selon une quelconque des revendications 25 à 28,
**caractérisé en ce que**
lesdits premier et second noeuds centraux comprennent respectivement un centre de commutation pour les services mobiles.
